# DEMANDE DE BREVET EUROPEEN

(11) **EP 0 712 030 A1**
(43) Date de publication de la demande: **15.05.1996**
(21) Numéro de dépôt: 95402498.0
(22) Date de dépôt: 08.11.1995
(51) Int. Cl.: G03B 21/60

(54) **Ecran de projection de vues fixes ou animées**

(30) Priorité: 09.11.1994 FR 9413491
(71) Demandeur: Stul, Julien, F-75012 Paris (FR)
(72) Inventeur: Stul, Julien, F-75012 Paris (FR)
(74) Mandataire: Jolly, Jean-Pierre

(57) **Abrégé**

Cet écran de projection comporte une surface réfléchissante (2) en aluminium, polie ou de préférence mate de laminage, recouverte d'un film transparent (3) de matière plastique, de préférence de polychlorure de vinyle.

## Description

La présente invention concerne un écran de projection de vues fixes ou animées, notamment de films.

Traditionnellement, de telles projections s'effectuent sur un écran blanc, dans un lieu sombre ou non éclairé. Lorsqu'on utilise un écran de ce type en un lieu éclairé par des ampoules électriques ou par des tubes luminescents à atmosphère de gaz rare (néon ou autre), les images projetées sont très peu visibles sur l'écran et ne retiennent nullement l'attention, même si l'on utilise des projecteurs de grande puissance, qui présentent l'inconvénient d'être très coûteux. Bien entendu, à la lumière naturelle, les résultats obtenus sont d'une qualité encore plus médiocre.

La présente invention vise à remédier à cet inconvénient en proposant un écran de projection qui conserve un pouvoir réfléchissant élevé en atmosphère éclairée, et qui se prête par conséquent à des projections dans une ambiance lumineuse, même de forte intensité, en offrant au spectateur des images d'une grande netteté et en lui assurant un grand confort visuel.

L'invention a également pour but de proposer un écran de projection de ce type, qui puisse être fabriqué aisément, moyennant un coût relativement modique, à partir de matériaux facilement disponibles dans le commerce.

A cet effet, l'invention a pour objet un écran de projection de vues fixes ou mobiles, caractérisé en ce qu'il comporte une surface réfléchissante en aluminium, polie ou de préférence mate de laminage, recouverte d'un film transparent de matière plastique.

L'écran conforme à l'invention pourra être plan ou incurvé. Un écran incurvé présente l'avantage de supprimer ou d'atténuer les points chauds, notamment dans les parties d'angle de l'écran.

La surface réfléchissante en aluminium pourra être polie ou mate de laminage. On lui fera subir avantageusement un traitement d'anodisation sur une épaisseur d'au moins 20 µm et, après un prétraitement de surface par chromatage, elle recevra de préférence au moins une couche d'une laque transparente de protection, qui sera ensuite thermodurcie.

Le film de matière plastique appliqué contre la surface réfléchissante pourra avantageusement être en polychlorure de vinyle ou en polyéthylène. Il pourra avoir une épaisseur de l'ordre de 60 à 100 µm, et on pourra le rendre solidaire de la surface réfléchissante à l'aide d'un adhésif transparent, par exemple d'un adhésif acrylique.

Outre son effet protecteur, le film de matière plastique vise à diffuser la lumière et à supprimer les reflets.

On utilisera avantageusement dans ce but le film commercialisé sous l'appellation PERMAGARD ou PERMACOLOR par la Société MAC TAC. Un tel film est proposé dans le commerce pour le montage et la protection de photographies ou d'images dans les industries photographiques ou graphiques, mais il s'est révélé posséder des propriétés, qui le rendent particulièrement avantageux dans le cadre de la présente invention. En particulier, il diffuse la lumière et rend une image semi-mate des vues projetées sur l'écran conforme à l'invention.

Naturellement, la surface réfléchissante en aluminium pourra être portée par un support rigide formant le corps de l'écran. On pourra utiliser avantageusement dans ce but des panneaux stratifiés commercialisés sous l'appellation ALUCOBOND ou DIBOND par la Société ALUSUISSE. Ces panneaux comportent une âme en polyéthylène et sont gainés sur leurs deux faces d'une mince couche d'aluminium, dont l'une pourra ainsi servir de surface réfléchissante.

Les dessins annexés aident à mieux comprendre l'invention. Sur ces dessins :
La figure 1 est une vue en perspective d'un écran conforme à l'invention ;
La figure 2 est une coupe suivant la ligne II-II de la figure 1 ;
La figure 3 est une coupe partielle d'un support à surface réfléchissante d'aluminium, utilisable dans le cadre de l'invention.

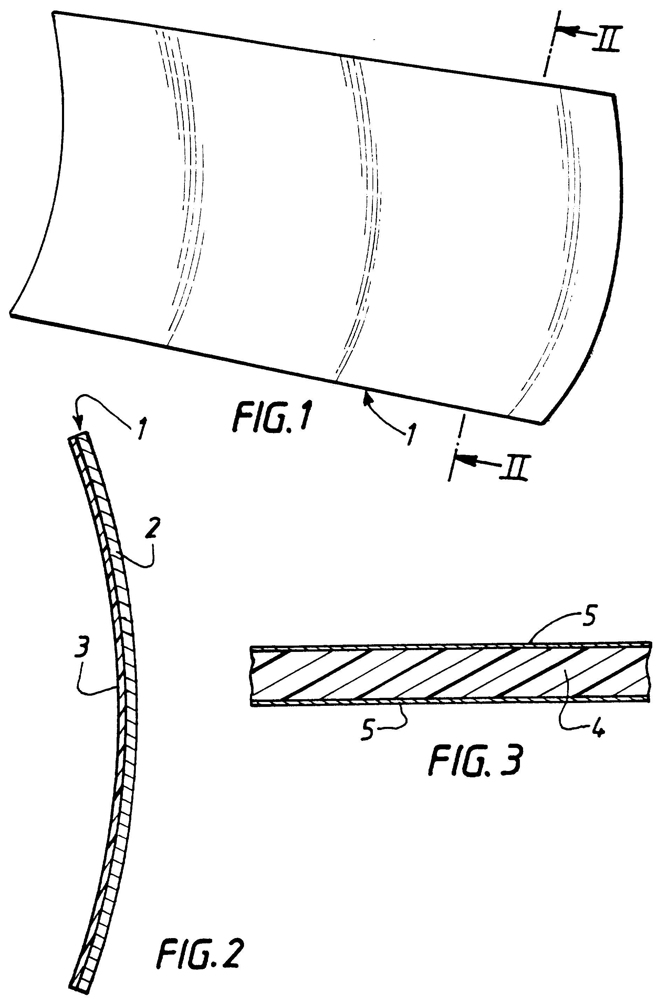

Comme on le voit sur les figures 1 et 2, dans cette forme de réalisation, l'écran 1 conforme à l'invention est incurvé et a la forme d'une portion de cylindre, mais il pourrait aussi bien être plan. Il comprend une pellicule rigide d'aluminium 2, dont la surface concave, mate ou polie, forme la surface réfléchissante de l'écran. Sur cette surface est collé, à l'aide d'un adhésif transparent, un film 3 d'une matière plastique transparente, par exemple un film transparent de polychlorure de vinyle, d'une épaisseur d'environ 80 µm, tel que le film commercialisé sous l'appellation PERMAGARD 7284. L'adhésif peut être un adhésif acrylique et l'épaisseur totale du film 3 de polychlorure de vinyle et de l'adhésif sera alors de l'ordre de 100 µm. Un joint pourra naturellement être prévu à la périphérie de l'écran.

Comme il a été indiqué ci-dessus, la pellicule d'aluminium formant surface réfléchissante sera avantageusement solidaire d'un support rigide et l'on pourra utiliser dans ce but un panneau statifié du type des panneaux ALUCOBOND (marque déposée). Un tel panneau, représenté en coupe transversale partielle sur la figure 3, comporte une âme 4 de polyéthylène, d'une épaisseur de 2 à 7 mm, gainé suivant deux faces parallèles d'une pellicule 5 d'aluminium, d'une épaisseur de l'ordre de 0,5 mm. L'une des deux plaques d'aluminium peut ainsi servir de surface réfléchissante, tandis que l'ensemble du panneau assure la rigidité de l'écran.

Un tel écran se prête à des projections en ambiance lumineuse forte, par exemple à la lumière du jour, dans des salles équipées de fenêtres, sans qu'il soit besoin d'obturer celles-ci, ou dans des salles éclairées artificiellement, sans qu'il soit nécessaire d'éteindre les lumières. Grâce au pouvoir réfléchissant de l'aluminium et à la diffusion assurée par le film de matière plastique transparente, l'écran conforme à l'invention offre en pleine lumière une qualité d'image au moins égale à celle obtenue avec un écran blanc dans l'obscurité, et même supérieure, puisque si un écran blanc a un gain de 1, l'écran conforme à l'invention a un gain d'au moins 13.

Cet écran se prête, en outre, à des projections tridimensionnelles, avec utilisation de lunettes à filtre polarisant, par exemple pour un entraînement de pilotes d'avion sur des simulateurs de vol, en salle éclairée.

L'écran conforme à l'invention peut en outre être utilisé comme panneau d'information dans des endroits lumineux, par exemple dans des centres commerciaux, ou pour des projections temporaires, par exemple dans des salons professionnels ou pour illustrer l'utilisation d'une machine ou d'un produit, ou encore dans des salles de contrôle.

L'écran pourra être réalisé en toutes dimensions, par exemple en petites dimensions de 1, 500 m x 1, 125 m, ou en grandes dimensions de 3 x 2 m. Quelles que soient ses dimensions, il pourra être utilisé en pleine lumière sans faire appel à des projecteurs de forte puissance, des projecteurs d'une puissance de 600 à 1200 lumens commerciaux se révèlant généralement suffisants.

L'écran conforme à l'invention pourra être fabriqué de façon simple par découpe aux dimensions désirées d'une plaque d'aluminium de la qualité désirée ou d'un support rigide dont est solidaire cette plaque, puis en appliquant sur celle-ci le film de matière plastique transparente, préalablement revêtu d'un adhésif transparent, sur sa face destinée à venir au contact de la surface d'aluminium.

Si l'on désire réaliser un écran incurvé, par exemple de forme cylindrique, on fera ensuite passer l'ensemble dans un dispositif de cintrage.

Un joint d'encadrement, par exemple en latex, en caoutchouc ou en acier, pourra ensuite être disposé à la périphérie de l'écran.

L'écran conforme à l'invention peut donc être fabriqué moyennant un coût relativement minime et il apporte un progrès considérable dans la technique des projections en ambiance éclairée.

## Revendications

1. Ecran de projection de vues fixes ou mobiles, caractérisé en ce qu'il comporte une surface réfléchissante (2) en aluminium, polie ou de préférence mate de laminage, recouverte d'un film transparent (3) de matière plastique.

2. Ecran selon la revendication 1, caractérisé en ce que la surface réfléchissante en aluminium est supportée par un support rigide.

3. Ecran selon la revendication 2, caractérisé en ce que la surface réfléchissante en aluminium et son support forment un stratifié.

4. Ecran selon la revendication 3, caractérisé en ce que le stratifié comporte une âme (4) en polyéthylène, revêtue suivant deux faces parallèles d'une pellicule d'aluminium (5).

5. Ecran selon l'une des revendications 1 à 4, caractérisé en ce que la surface réfléchissante en aluminium (3, 5) a subi un traitement d'anodisation.

6. Ecran selon l'une des revendications 1 à 5, caractérisé en ce que la surface réfléchissante en aluminium (3, 5) est revêtue d'une couche de laque thermodurcie.

7. Ecran selon l'une des revendications 1 à 6, caractérisé en ce que le film (3) en matière plastique transparente est constitué de polychlorure de vinyle, ou de polyéthylène, de préférence de polychlorure de vinyle.

8. Ecran selon la revendication 7, caractérisé en ce que le film (3) de matière plastique transparente a une épaisseur comprise entre 60 et 100 µm.

9. Ecran selon l'une des revendications 1 à 8, caractérisé en ce que le film (3) de matière plastique transparente est collé à l'aide d'un adhésif transparent contre la surface réfléchissante en aluminium (2).

10. Ecran selon l'une des revendications 1 à 9, caractérisé en ce qu'il est plan ou présente la forme d'une portion de cylindre.
